# EUROPEAN PATENT APPLICATION

(11) **EP 4 560 667 A1**
(43) Date of publication of application: **28.05.2025**
(21) Application number: 24205775.0
(22) Date of filing: 10.10.2024
(51) Int. Cl.: H01G 4/232, H01G 4/12, H01G 4/30

(54) **MULTILAYER ELECTRONIC COMPONENT**

(30) Priority: 22.11.2023 KR 20230163028
(71) Applicant: Samsung Electro-Mechanics Co., Ltd., Suwon-si, Gyeonggi-do (KR)
(72) Inventor: Kim, Seung Ah, Suwon-si, Gyeonggi-do (KR); Lee, Kang Ha, Suwon-si, Gyeonggi-do (KR); Choi, Eun Byeol, Suwon-si, Gyeonggi-do (KR); Choi, Hong Je, Suwon-si, Gyeonggi-do (KR); Kim, Hong Seok, Suwon-si, Gyeonggi-do (KR); Kang, Bum Suk, Suwon-si, Gyeonggi-do (KR)
(74) Representative: Grünecker Patent- und Rechtsanwälte PartG mbB

(57) **Abstract**

A multilayer electronic component includes a body including a dielectric layer and first and second internal electrodes alternately disposed with the dielectric layer in a first direction, and external electrodes including band portions disposed on first and second surfaces of the body, connection portions disposed on third and fourth surfaces of the body, and edge portions connecting the band portions and the connection portions and disposed at edges connecting the first and second surfaces and the third and fourth surfaces of the body, wherein the external electrodes includes first external electrode layers connected to the first and second internal electrodes and including first glass, and second external electrode layers disposed on the first external electrode layer of the edge portions and including second glass, and wherein the second glass includes Fe, and the first glass does not include Fe.

## Description

### CROSS-REFERENCE TO RELATED APPLICATION(S)

This application claims benefit of priority to Korean Patent Application No. 10-2023-0163028 filed on November 22, 2023 in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, may be a chip condenser mounted on the printed circuit boards of various types of electronic products, such as image display devices including a liquid crystal display (LCD), a plasma display panel (PDP), or the like, a computer, a smartphone, a mobile phone, or the like, and serving to charge or discharge electricity therein or therefrom.

Such a multilayer ceramic capacitor may be used as a component of various electronic devices, as the multilayer ceramic capacitor has a small size with high capacitance and is easily mounted. As various electronic devices such as computers, mobile devices, or the like have been miniaturized and implemented with high-output, demand for miniaturization and high capacitance of the multilayer ceramic capacitors has increased.

A sintered electrode, which may be mainly used as a basic electrode of a multilayer ceramic capacitor, may act as a main penetration path for external moisture or a plating liquid as a thickness of the sintered electrode decreases from a center of a body toward edges thereof.

Therefore, there is a need to sufficiently secure the thickness of the sintered electrode located at the edges of the body.

### SUMMARY

An aspect of the present disclosure is to provide a multilayer electronic component having excellent moisture resistance reliability and high temperature reliability.

An aspect of the present disclosure is to provide a multilayer electronic component suppressing an increase in equivalent series resistance (ESR).

The purposes of the present disclosure are not limited to the above-described contents, and can be more easily understood in a process of explaining specific embodiments of the present disclosure.

According to an aspect of the present disclosure, A multilayer electronic component includes a body including a dielectric layer and first and second internal electrodes alternately disposed with the dielectric layer in a first direction, and including a first surface and a second surface opposing each other in the first direction, a third surface and a fourth surface, connected to the first and second surfaces and opposing each other in a second direction, and a fifth surface and a sixth surface, connected to the first to fourth surfaces and opposing each other in a third direction; and external electrodes including band portions disposed on the first and second surfaces, connection portions disposed on the third and fourth surfaces, and edge portions connecting the band portions and the connection portions and disposed at edges connecting the first and second surfaces and the third and fourth surfaces, wherein the external electrodes includes first external electrode layers connected to the first and second internal electrodes and including first glass, and second external electrode layers disposed on the first external electrode layer of the edge portions and including second glass, and wherein the second glass includes Fe, and the first glass does not include Fe.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 schematically illustrates a perspective view of a multilayer electronic component according to an embodiment of the present disclosure.
FIG. 2 schematically illustrates a cross-sectional view of FIG. 1, taken along line I-I'.
FIG. 3 illustrates a cross-section corresponding to the cross-section of FIG. 1, taken along line I-I', in a multilayer electronic component according to an embodiment.
FIG. 4 is an enlarged view of portion P1 in FIG. 2.
FIG. 5 is an enlarged view of portion P2 in FIG. 2.
FIG. 6 is a cross-sectional view of FIG. 1, taken along line II-II'.

### DETAILED DESCRIPTION

Hereinafter, embodiments of the present disclosure will be described with reference to specific embodiments and the accompanying drawings. However, embodiments of the present disclosure may be modified into various other forms, and the scope of the present disclosure is not limited to the embodiments described below. Further, embodiments of the present disclosure may be provided for a more complete description of the present disclosure to the ordinarily skilled artisan. Therefore, shapes, sizes, and the like, of the elements in the drawings may be exaggerated for clarity of description, and the elements denoted by the same reference numerals in the drawings may be the same elements.

In addition, in order to clearly explain the present disclosure in the drawings, portions not related to the description will be omitted for clarification of the present disclosure, and a thickness may be enlarged to clearly illustrate layers and regions. The same reference numerals will be used to designate the same components in the same reference numerals. Further, throughout the specification, when an element is referred to as "comprising" or "including" an element, it means that the element may further include other elements as well, without departing from the other elements, unless specifically stated otherwise.

In the drawings, a first direction may be defined as a stack direction or a thickness T direction, a second direction may be defined as a length L direction, and a third direction may be defined as a width W direction.

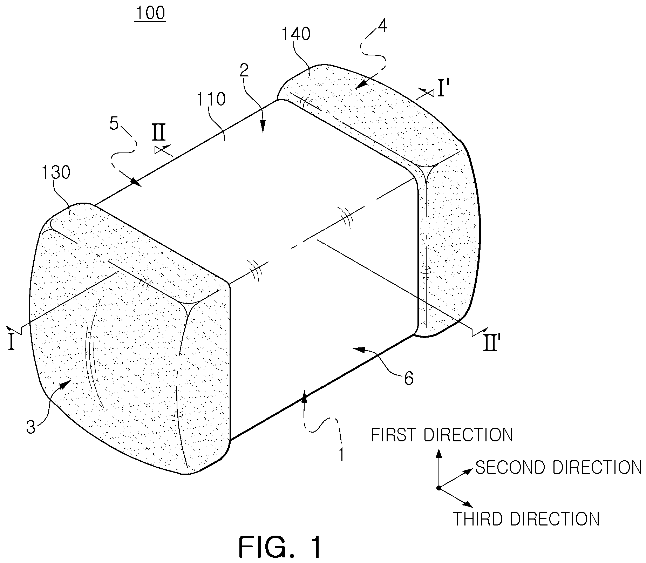

FIG. 1 schematically illustrates a perspective view of a multilayer electronic component according to an embodiment of the present disclosure.

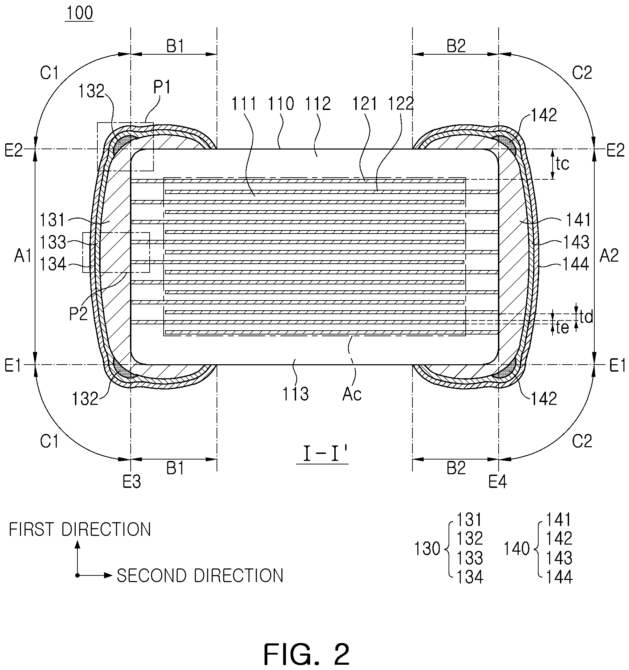

FIG. 2 schematically illustrates a cross-sectional view of FIG. 1, taken along line I-I'.

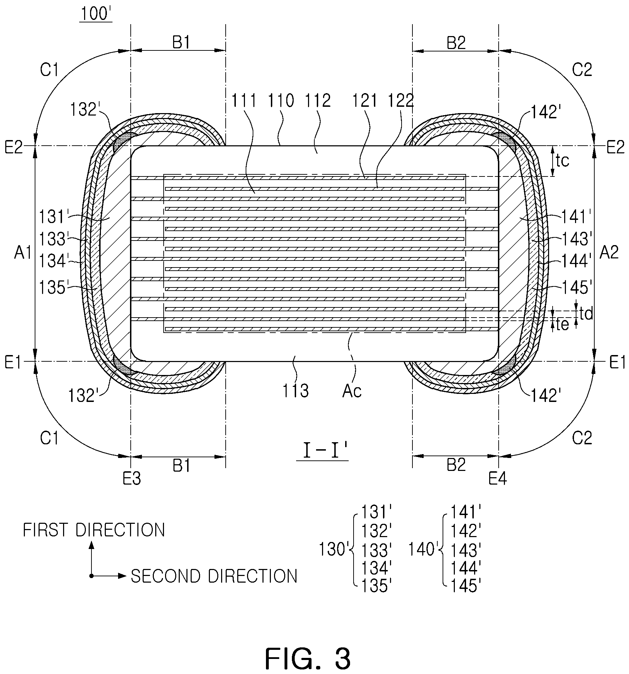

FIG. 3 illustrates a cross-section corresponding to the cross-section of FIG. 1, taken along line I-I', in a multilayer electronic component according to an embodiment.

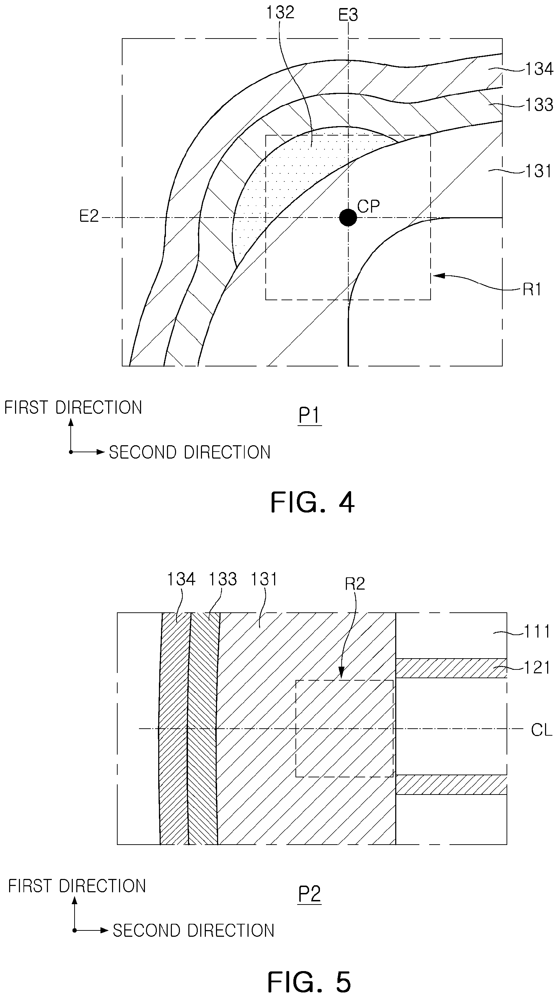

FIG. 4 is an enlarged view of portion P1 in FIG. 2.

FIG. 5 is an enlarged view of portion P2 in FIG. 2.

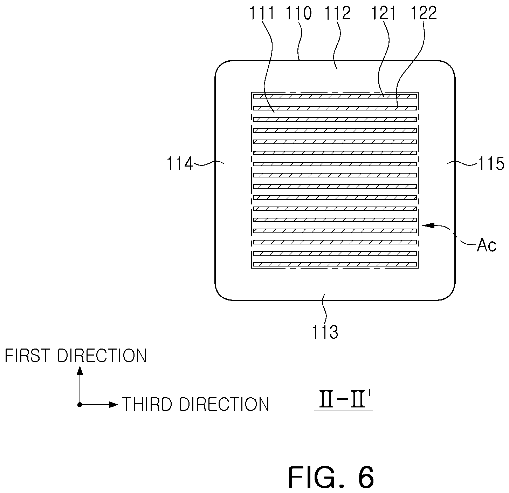

FIG. 6 is a cross-sectional view of FIG. 1, taken along line II-II'.

Hereinafter, a multilayer electronic component 100 according to an embodiment of the present disclosure will be described in detail with reference to FIGS. 1 to 6. In addition, a multilayer ceramic capacitor (hereinafter referred to as 'MLCC') may be described as an example of a multilayer electronic component, but the present disclosure is not limited thereto.

A multilayer electronic component 100 according to some embodiments of the present disclosure may include a body 110 including a dielectric layer 111 and first and second internal electrodes 121 and 122 alternately disposed with the dielectric layer in a first direction, and including first and second surfaces 1 and 2 opposing each other, third and fourth surfaces 3 and 4 connected to the first and second surfaces and opposing each other in a second direction, and fifth and sixth surfaces 5 and 6 connected to first to fourth surfaces and opposing each other in a third direction; and external electrodes 130 and 140 including band portions B1 and B2 disposed on the first and second surfaces, connection portions A1 and A2 disposed on the third and fourth surfaces, and edge portions C1 and C2 connecting the band portions and the connection portions and disposed at edges connecting the first and second surfaces and the third and fourth surfaces, wherein the external electrodes include first external electrode layers 131 and 141 disposed on the band portion, the connection portions and the edge portions and connected to the internal electrodes and including first glass, and second external electrode layers 132 and 142 disposed on the first external electrode layer of the edge portions and including second glass, and wherein the second glass includes Fe, and the first glass does not include Fe.

Hereinafter, configurations included in a multilayer electronic component 100 according to some embodiments of the present disclosure will be described.

The body 110 may include the dielectric layers 111 and the internal electrodes 121 and 122, alternately stacked.

Although the specific shape of the body 110 is not particularly limited, the body 110 may have a hexahedral shape or the like, as illustrated. Due to shrinkage of ceramic powder particles included in the body 110 during a sintering process, the body 110 may not have a perfectly straight hexahedral shape, but may have a substantially hexahedral shape.

The body 110 may include first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first and second surfaces 1 and 2, connected to the third and fourth surfaces 3 and 4, and opposing each other in the third direction.

As a margin region in which the internal electrodes 121 and 122 on the dielectric layer 111 are not disposed overlaps, a step difference may occur due to thicknesses of the internal electrodes 121 and 122. Therefore, edges connecting the first surface and the third to fifth surfaces and/or edges connecting the second surface and the third to fifth surfaces may have a shape contracted toward a center of the body 110 in the first direction when viewed from the first surface or the second surface. Alternatively, edges connecting the first surface 1 and the third to sixth surfaces 3, 4, 5, and 6 and/or edges connecting the second surface 2 and the third to sixth surfaces 3, 4, 5, and 6 due to shrinkage behavior during a sintering process of the body may have a shape contracted toward the center of the body 110 in the first direction when viewed from the first surface or the second surface. Alternatively, to prevent chipping defects or the like, vertices connecting each of the surfaces of the body 110 may be rounded by performing a separate process, such that the edges connecting the first surface and the third to sixth surfaces and/or the edges connecting the second surface and the third to sixth surfaces may be rounded.

A plurality of dielectric layers 111 forming the body 110 may be in a sintered state, and a boundary between adjacent dielectric layers 111 may be integrated to such an extent that it may be difficult to identify the same without using a scanning electron microscope (SEM). The number of stacked dielectric layers does not need to be particularly limited, and may be determined considering a size of the multilayer electronic component. For example, the body may be formed by stacking 400 or more dielectric layers.

The dielectric layer 111 may be prepared by forming a ceramic slurry including ceramic powder particles, an organic solvent, and a binder, applying and drying the slurry on a carrier film to prepare a ceramic green sheet, and then sintering the ceramic green sheet. The ceramic powder particles are not particularly limited, as long as sufficient capacitance may be obtained therewith. For example, as the ceramic powder particles, barium titanate (BaTiO₃)-based powder particles may be used. For a more specific example, the ceramic powder particles may comprise barium titanate (BaTiO₃)-based powder particles, CaZrO₃-based paraelectric powder particles, and combination thereof. For a more specific example, the barium titanate (BaTiO₃)-based powder particles may include one or more selected from the group consisting of BaTiO₃, (Ba₁₋ₓCaₓ)TiO₃(0<x<1), Ba(Ti_{1-y}Ca_{y})O₃(0<y<1), (Ba₁₋ₓCaₓ)(Ti_{1-y}Zr_{y})O₃(0<x<1, 0<y<1), Ba (Ti_{1-y}Zr_{y})O₃(0<y<1), and combinations thereof, and the CaZrO₃-based paraelectric powder particles may be (Ca₁₋ₓSrₓ)(Zr_{1-y}Ti_{y})O₃(0<x<1, 0<y<1).

Therefore, the dielectric layer 111 may include one or more selected from the group consisting of BaTiO₃, (Ba₁₋ₓCaₓ)TiO₃(0<x<1), Ba(Ti_{1-y}Ca_{y})O₃(0<y<1), (Ba₁₋ₓCaₓ)(Ti_{1-y}Zr_{y})O₃(0<x<1, 0<y<1), Ba(Ti_{1-y}Zr_{y})O₃(0<y<1), (Ca₁₋ₓSrₓ)(Zr_{1-y}Ti_{y})O₃(0<x<1, 0<y<1), and combinations thereof.

An average thickness td of the dielectric layer 111 is not particularly limited.

For the purpose of miniaturization and high capacitance of the multilayer electronic component 100, the average thickness td of the dielectric layer 111 may be 0.35 um or less, and to improve reliability of the multilayer electronic component 100 under high temperature and high pressure, the average thickness td of the dielectric layer 111 may be 3 um or more.

The average thickness td of the dielectric layer 111 may be measured by scanning images of cross-sections (L-T plane) in third and first directions of the body 110 using a scanning electron microscope (SEM).

For example, the average thickness td of the dielectric layer 111 may be determined by defining five points, one reference point, two points to the left thereto, and two points to the right thereto, at equal intervals around the one reference point, measuring thicknesses of the points, and calculating an average value therefrom, based on a point in which a length direction center line of the body and a thickness direction center line of the body meet, for a total of five dielectric layers, including one dielectric layer, two dielectric layers thereon, and two dielectric layers therebelow, based on the one dielectric layer provided at the point in which the length direction center line of the body and the thickness direction center line of the body meet, among dielectric layers extracted from an image acquired by scanning a cross-section in length and thickness directions (L-T) cut from a central portion in a width direction of the body 110 using a scanning electron microscope (SEM).

The body 110 may include a capacitance formation portion Ac disposed in the body 110 and including the dielectric layer 111 and the first and second internal electrodes 121 and 122 alternately disposed, to form capacitance, and cover portions 112 and 113 respectively disposed on opposite surfaces of the capacitance forming portion Ac in the first direction.

The capacitance forming portion Ac may be a portion that contributes to forming capacitance of the capacitor, and may be formed by repeatedly stacking a plurality of first and second internal electrodes 121 and 122 with the dielectric layer 111 interposed therebetween. Additionally, the first internal electrode 121 may be disposed on an uppermost end of the capacitance forming portion Ac in the first direction, and the second internal electrode 122 may be disposed on a lowermost end of the capacitance forming portion Ac in the first direction.

The internal electrodes 121 and 122 may include first and second internal electrodes 121 and 122. The first and second internal electrodes 121 and 122 may be alternately disposed to face each other with the dielectric layer 111 constituting the body 110 interposed therebetween, and may be exposed from the third and fourth surfaces 3 and 4 of the body 110, respectively.

The first internal electrode 121 may be spaced apart from the fourth surface 4, and may be exposed through the third surface 3, and the second internal electrode 122 may be spaced apart from the third surface 3, and may be exposed through the fourth surface 4. The first external electrode 131 may be disposed on the third surface 3 of the body, and may be connected to the first internal electrode 121, and the second external electrode 132 may be disposed on the fourth surface 4 of the body, and may be connected to the second internal electrode 122.

For example, the first internal electrode 121 may not be connected to the second external electrode 132, but may be connected to the first external electrode 131, and the second internal electrode 122 may not be connected to the first external electrode 131, but may be connected to the second external electrode 132. Therefore, the first internal electrode 121 may be formed at a certain distance apart from the fourth surface 4, and the second internal electrode 122 may be formed at a certain distance apart from the third surface 3. Additionally, the first and second internal electrodes 121 and 122 may be arranged to be spaced apart from the fifth and sixth surfaces of the body 110.

A conductive metal included in the internal electrodes 121 and 122 may include one or more selected from the group consisting of Ni, Cu, Pd, Ag, Au, Pt, Sn, W, Ti, and alloys thereof, and more preferably may include Ni, but the present disclosure is not limited thereto.

An average thickness te of the internal electrodes 121 and 122 is not particularly limited, and may vary depending on the purpose. To miniaturize the multilayer electronic component 100, the average thickness te of the internal electrodes 121 and 122 may be 0.35 um or less, and to improve reliability of the multilayer electronic component 100 under high temperature and high pressure, the average thickness te of the internal electrodes 121 and 122 may be 3 µm or more.

The average thickness te of the internal electrodes 121 and 122 may be determined by defining five points, one reference point, two points to the left thereto, and two points to the right thereto, at equal intervals around the one reference point, measuring thicknesses of the points, and calculating an average value therefrom, based on a point in which a length direction center line of the body and a thickness direction center line of the body meet, for a total of five dielectric layers, including one internal electrode layer, two internal electrode layers thereon, and two internal electrode layers therebelow, based on the one internal electrode layer provided at the point in which the length direction center line of the body and the thickness direction center line of the body meet, among internal electrode layers extracted from an image acquired by scanning a cross-section in length and thickness directions (L-T) cut from a central portion in a width direction of the body 110 using a scanning electron microscope (SEM).

The cover portions 112 and 113 may be disposed above and below the capacitance forming portion Ac in the first direction.

The cover portions 112 and 113 may basically serve to prevent damage to the internal electrodes due to physical or chemical stress.

The cover portions 112 and 113 may include the same material as the dielectric layer 111. For example, the cover portions 112 and 113 may include a ceramic material, for example, a barium titanate (BaTiO₃)-based ceramic material.

Thicknesses of the cover portions 112 and 113 do not need to be particularly limited. For example, a thickness tc1 of the cover portions 112 and 113 may be 20 um or less, respectively.

The average thickness tc1 of the cover portions 112 and 113 may mean a size in the first direction, and may be an average value of sizes of the cover portions 112 and 113 measured at five points at equal intervals above or below the capacitance forming portion Ac in the first direction.

Additionally, margin portions 114 and 115 may be disposed on a side surface of the capacitance forming portion Ac.

The margin portions may include a first margin portion 114 disposed on the fifth surface 5 of the body 110, and a second margin portion 115 disposed on the sixth surface 6. For example, the margin portions 114 and 115 may be disposed on both end surfaces of the ceramic body 110 in the width direction.

As illustrated in FIG. 6, the margin portions 114 and 115 may refer to regions between both ends of the first and second internal electrodes 121 and 122 and a boundary surface of the body 110, in a cross-section of the body 110 in widththickness (W-T) directions.

The margin portions 114 and 115 may basically serve to prevent damage to the internal electrodes due to physical or chemical stress.

The margin portions 114 and 115 may be prepared by applying a conductive paste on a ceramic green sheet to form the internal electrodes, except for regions in which the margin portions are formed.

Widths of the margin portions 114 and 115 (i.e., a length of the margin portions 114 and 115 in the third direction) do not need to be particularly limited. For example, average widths of the margin portions 114 and 115 may be 20 um or less, respectively.

The average widths of the margin portions 114 and 115 may mean an average size of a region in which the internal electrodes are spaced apart from the fifth surface in the third direction, and an average size of a region in which the internal electrodes are spaced apart from the sixth surface in the third direction, and may be an average value of sizes of the margin portions 114 and 115, in the third direction, measured at five points at equal intervals on the side surface of the capacitance forming portion Ac.

The external electrodes 130 and 140 may be disposed on the third and fourth surfaces 3 and 4 of the body 110, respectively.

The external electrodes 130 and 140 may be disposed on the third and fourth surfaces 3 and 4 of the body 110, respectively, and may include the external electrodes 130 and 140 respectively connected to the first and second internal electrodes 121 and 122.

Referring to FIG. 1 and 6, the external electrodes 130 and 140 may be arranged to cover both end surfaces of the side margin portions 114 and 115 in the second direction.

In the present embodiment, a structure in which the multilayer electronic component 100 has two external electrodes 130 and 140 is illustrated, but the number and shapes of the external electrodes 130 and 140 may be changed, depending on shapes of the internal electrodes 121 and 122, or other purposes.

Referring to FIG. 2, the external electrodes 130 and 140 may include the band portions B1 and B2, the connection portions A1 and A2, and the edge portions C1 and C2.

Specifically, the external electrodes 130 and 140 may include the band portions B1 and B2 disposed on the first and second surfaces 1 and 2, the connection portions A1 and A2 disposed on the third and fourth surfaces 3 and 4, and the edge portions C1 and C2 connecting the band portions B1 and B2 and the connection portions A1 and A2 and disposed at the edges connecting the first and second surfaces and the third and fourth surfaces.

Referring to FIGS. 2 and 4, the connection portions A1 and A2 may represent regions between an extension line E1 of the first surface and an extension line E2 of the second surface, the band portion B1 may represent a region between an extension line E3 of the third surface and an end in which the external electrode 130 is in contact with the body 110, the band portion B2 may represent a region between an extension line E4 of the fourth surface and an end in which the external electrode 140 is in contact with the body 110, the edge portion C1 may represent a region between the extension line E3 of the third surface and the extension line E1 of the first surface and a region between the extension line E3 of the third surface and the extension line E2 of the second surface, and the edge portion C2 may represent a region between the extension line E4 of the fourth surface and the extension line E1 of the first surface and a region between the extension line E4 of the fourth surface and the extension line E2 of the second surface.

In FIG. 2, although it is illustrated that the edge portions C1 and C2 are disposed at edges connecting the first and second surfaces and the third and fourth surfaces, but the edge portions C1 and C2 may be disposed at edges connecting the third and fourth surfaces, and the first, second, fifth, and sixth surfaces. Likewise, the band portions B1 and B2 may be disposed not only on the first and second surfaces 1 and 2, but also on the fifth and sixth surfaces 5 and 6.

The external electrodes 130 and 140 may include the first external electrode layers 131 and 141 connected to the internal electrodes 121 and 122, respectively, and including the first glass. The first external electrode layers 131 and 141 may be directly connected to the first and second internal electrodes 121 and 122 to ensure electrical continuity.

The first external electrode layers 131 and 141 may include the first glass. The first glass may include one or more selected from the group consisting of Ba, Zn, B, Si, and Al. As will be described later, the first glass included in the first external electrode layers 131 and 141 may not include Fe.

The second external electrode layers 132 and 142 including a second glass may be included in the edge portions C1 and C2 of the first external electrode layers 131 and 141 . The second external electrode layers 132 and 142 may serve to prevent penetration of external moisture or a plating solution that may occur as thicknesses of the edge portions C1 and C2 decrease during sintering of the first external electrode layers 131 and 141.

The second external electrode layers 132 and 142 may include the second glass. The second glass may include one or more selected from the group consisting of Ba, Zn, B, Si, and Al. As will be described later, the second glass included in the second external electrode layers 132 and 142 may include Fe.

The first external electrode layers 131 and 141 and the second external electrode layers 132 and 142 may include a conductive metal. As the conductive metal, any material having excellent electrical conductivity may be used, and is not particularly limited. For example, the conductive metal may be one or more selected from the group consisting of nickel (Ni), copper (Cu), and alloys thereof.

According to some embodiments of the present disclosure, the external electrodes 130 and 140 may include the first external electrode layers 131 and 141 connected to the first and second internal electrodes 121 and 122, respectively, and including the first glass, and the second external electrode layers 132 and 142 disposed on the first external electrode layers 131 and 141 of the edge portions C1 and C2, respectively, and including the second glass, and wherein the second glass may include Fe, and the first glass may not include Fe.

The first external electrode layers 131 and 141 including the first glass may be eroded when exposed to an acidic plating solution or moisture. When thicknesses of the first external electrode layers 131 and 141 are thick, even when the first glass on some surfaces is eroded, the first glass therein may prevent penetration of a plating solution or moisture. When the first glass is eroded in a thin portion of the first external electrode layers 131 and 141, a plating solution or moisture may penetrate through the thin portion of the first external electrode layers 131 and 141, which may deteriorate moisture resistance reliability and high temperature reliability of the multilayer electronic component.

Therefore, according to some embodiments of the present disclosure, the second external electrode layers 132 and 142 including second glass may be disposed on the edge portions C1 and C2 of the first external electrode layers 131 and 141, in order to have a relatively thin thickness of the first external electrode layers 131 and 141, to prevent penetration of the plating solution or the moisture, to improve moisture resistance reliability and high temperature reliability of the multilayer electronic component 100.

To improve moisture resistance reliability and high temperature reliability, the second glass included in the second external electrode layers 132 and 142 may include Fe. When the first glass included in the first external electrode layers 131 and 141 includes Fe, connectivity between the internal electrodes 121 and 122 and the first external electrode layers 131 and 141 may be reduced.

Therefore, according to some embodiments of the present disclosure, the second external electrode layers 132 and 142 disposed on the edge portions C1 and C2 of the first external electrode layers 131 and 141, which may be main penetration paths of the plating solution and external moisture, may include the second glass including Fe, and the first external electrode layers 131 and 141 may include the first glass not including Fe, to suppress a phenomenon of deteriorating connectivity of the internal electrodes 121 and 122.

A method of confirming features that the second glass includes Fe and the first glass does not include Fe is not particularly limited, but one example will be described with reference to FIGS. 4 and 5.

Referring to FIG. 4, the presence of Fe in the second glass may be determined by performing scanning electron microscope-energy dispersive X-ray spectroscopy (SEM-EDS) analysis on an region R1 of width x length = 15 µm x 15 um, based on a point CP, under conditions of acceleration voltage of 5 to 20KV and magnification of more than 1500 times, if the point CP is a point in which the extension line E3 of the third surface and the extension line E2 of the second surface meets in a cross-section in the first and second directions, polished to pass through a center of the multilayer electronic component 100 in the third direction.

Referring to FIG. 5, a method of determining whether the first glass does not include Fe may be performed by performing SEM-EDS analysis on an region R2 of width x length = 15 µm x 15 um, based on a straight line CL parallel to the second direction and passing through a center of the multilayer electronic component 100 in the first direction, in a cross-section in the first and second directions, polished to pass through a center of the multilayer electronic component 100 in the third direction, under conditions of acceleration voltage of 5 to 20KV and magnification of more than 1500 times.

As in the measurement methods illustrated in FIGS. 4 and 5, Fe may be detected in the R1 region, but Fe may not be detected in the R2 region.

In some embodiments, thicknesses of the first external electrode layers 131 and 141 of the edge portions C1 and C2 may be greater than a thickness of the first external electrode layer of the connecting portions A1 and A2, and a thickness of the first external electrode layer of the band portions B1 and B2.

Since the first external electrode layers 131 and 141 include the first glass, when the first external electrode layers 131 and 141 are formed on the body 110, the first external electrode layers 131 and 141 of the edge portions C1 and C2 may be formed to be thinner than the thickness of the first external electrode layer of the connection portions A1 and A2 and the thickness of the first external electrode layer of the band portions B1 and B2. As described above, when the thicknesses of the first external electrode layers 131 and 141 of the edge portions C1 and C2 are thinner than other regions, the edge portions of the first external electrode layers 131 and 141 may be a main penetration path of external moisture or a plating solution. According to some embodiments of the present disclosure, the second external electrode layers 132 and 142 may be disposed on the first external electrode layers 131 and 141 of the edge portions C1 and C2, the second external electrode layers 132 and 142 may include the second glass including Fe, and the first external electrode layers 131 and 141 may include the first glass not including Fe, to improve moisture resistance reliability and high temperature reliability. Therefore, even when the thicknesses of the first external electrode layers 131 and 141 are formed to be thinner than the thickness of the first external electrode layer of the connection portions A1 and A2 and the thickness of the first external electrode layer of the band portions B1 and B2, moisture resistance reliability and high temperature reliability of the multilayer electronic component may be secured.

The first external electrode layers 131 and 141 may have the thinnest thickness at the edge portions C1 and C2, but the connection portions A1 and A2 adjacent to the edge portions C1 and C2 or the band portions B1 and B2 adjacent to the edge portions C1 and C2 may not be formed with a sufficient thickness for the first external electrode layers 131 and 141 to prevent penetration of external moisture or a plating solution. Referring to FIGS. 2 and 4, second external electrode layers 132 and 142 according to some embodiments may be disposed on a portion of the first external electrode layers 131 and 141 of the connection portions A1 and A2 or the first external electrode layers 131 and 141 a portion of the band portions B1 and B2 of the electrode layers 131 and 141, to further improve moisture resistance reliability and high temperature reliability of the multilayer electronic component 100.

The thicknesses of the second external electrode layers 132 and 142 are not particularly limited. To ensure sufficient moisture resistance reliability and high temperature reliability, minimum thicknesses of the second external electrode layers 132 and 142 may be 1 µm or more. The minimum thickness of the second external electrode layers 132 and 142 may mean minimum Feret diameters of regions in which the second external electrode layers 132 and 142 are formed, in a cross-section in the first and second directions, polished to pass through a center of the multilayer electronic component 100 in the third direction, but the present disclosure is not limited thereto.

A method of forming the first and second external electrode layers 131, 132, 141, and 142 is not particularly limited. For example, the first external electrode layers 131 and 141 may be formed by transferring a sheet including a conductive metal and first glass onto the body, or may be formed by transferring a sheet including a conductive metal and first glass. Likewise, the second external electrode layers 132 and 142 may be formed by masking a region excluding a position in which the second external electrode layer will be formed, and transferring a sheet including a conductive metal and second glass on a portion of the first external electrode layers 131 and 141, or by transferring a sheet including a conductive metal and second glass.

The external electrodes 130 and 140 may include plating layers 133 and 134, and 143, and 144, disposed on the first external electrode layers 131 and 141 and the second external electrode layers 132 and 142, respectively.

Types of the plating layers 133, 143, 134, and 144 are not particularly limited, may be plating layers including one or more selected from the group consisting of Ni, Sn, Pd, and alloys thereof, and may be formed as a plurality of layers.

Referring to FIG. 2, the plating layers may include first plating layers 133 and 143 and second plating layers 134 and 144 disposed on the first plating layers 133 and 143, respectively.

The first plating layers 133 and 143 may serve to improve sealing properties and increase a mechanical strength of the external electrode. To this end, the first plating layers 133 and 143 may be plating layers including one or more selected from the group consisting of a Ni plating layer, a Pd plating layer, or an alloy thereof. The second plating layers 134 and 144 may be an outermost layers of the external electrodes 130 and 140, and may be Sn plating layers for improving packaging characteristics.

In some embodiments, the first plating layers 133 and 143 may simultaneously cover the first external electrode layers 131 and 141, not covered by the second external electrode layers 132 and 142, and the second external electrode layers 132 and 142. Therefore, sealing properties of the multilayer electronic component 100 may be further improved.

A size of the multilayer electronic component 100 does not need to be particularly limited.

For example, to simultaneously achieve miniaturization and high capacitance, the multilayer electronic component 100 may have a size of 0201 (length × width, 0.2 mm × 0.1 mm) or more, and products in which reliability is important under high temperature and high pressure environments may have a size of 3216 (length × width, 3.2 mm × 1.6 mm) or more, but the present disclosure is not limited thereto.

In this case, a length of the multilayer electronic component 100 may refer to a maximum size of the multilayer electronic component 100 in the second direction, a thickness of the multilayer electronic component 100 may refer to a maximum size of the multilayer electronic component 100 in the first direction, and a width of the multilayer electronic component 100 may refer to a maximum size of the multilayer electronic component 100 in the third direction.

Referring to FIG. 3, external electrodes 130' and 140' of a multilayer electronic component 100' according to some embodiments may include first external electrode layers 131' and 141' connected to internal electrodes 121 and 122, respectively, and including first glass, and second external electrode layers 132' and 142', respectively, disposed on the first external electrode layers 131' and 141' of edge portions C1 and C2 and including second glass, wherein the second glass may include Fe, and the first glass may not include Fe.

In addition, the external electrodes 130' and 140' of a multilayer electronic component 100' according to some embodiments may further include conductive resin layers 135' and 145', respectively, covering the first external electrode layers 131' and 141' not covered by the second external electrode layers 132' and 142'. Therefore, bending strength of the multilayer electronic component 100' may be improved.

The conductive resin layers 135' and 145' may include a conductive filler and a resin. The conductive filler may include one or more selected from the group consisting of Cu, Ni, Ag, Sn, and Cr, and the conductive filler may exist in a dispersed form within the resin of the conductive resin layers 135' and 145'. The resin may include a resin having strong heat resistance. For example, one or more selected from the group consisting of a phenol resin, a urea resin, a diallyl phthalate resin, a melanin resin, a guanamine resin, an unsaturated polyester resin, a polyurethane resin, an epoxy resin, an acrylic resin, an ethyl cellulose resin, an aminoalkyl resin, a melamine-urea co-condensation resin, a silicon resin, and a polysiloxane resin, but the present disclosure is not limited thereto.

Since the conductive resin layers 135' and 145' have weaker hardness than an electrode layer including glass, plating defects may occur due to stress generated during a plating process. In addition, the conductive resin layers 135' and 145' may have a problem in that it is difficult to reduce ESR, compared to the electrode layer, because a conductive filler exists in a dispersed form in the resin.

Therefore, in some embodiments, the conductive resin layers 135' and 145' may be arranged to cover a portion of the second external electrode layers 132' and 142', to directly connect the second external electrode layers 132' and 142' and first plating layers 133' and 143'. Therefore, plating properties and ESR characteristics of the multilayer electronic component 100' may be improved.

Specifically, referring to FIG. 3, the external electrodes 130' and 140' may further include first plating layer 133' and 143' arranged on the second external electrode layers 132' and 142' not covered by the conductive resin layers 135' and 145', and the conductive resin layer 135' and 145', and a portion of the first plating layer 133' and 143' may be in contact with a portion of the second external electrode layers 132' and 142' not covered with the second conductive resin layer 135' and 145'. Therefore, plating properties and ESR characteristics of the multilayer electronic component 100' may be improved.

Second plating layers 134' and 144' may be disposed on the first plating layers 133' and 143', and in this case, since components of the first plating layers 133' and 143' and components of the second plating layers 134' and 144 may be the same as those of the first plating layers 133 and 143 and the second plating layers 134 and 144, described above, overlapping descriptions thereof will be omitted.

### (Experimental Example)

Table 1 below illustrates the number of samples having defects by evaluating high temperature reliability and moisture resistance reliability of Comparative Example 1 and Inventive Example 1.

Comparative Example 1 was a case in which a second external electrode layer was not formed and Fe was not detected in entire regions of external electrodes. Inventive Example 1 was a case in which first and second external electrode layers were included as in some embodiments of the present disclosure, glass of the second external electrode layer included Fe, and glass of the first external electrode layer does not include Fe.

For high temperature reliability, it was evaluated for 12 hours under conditions of 105°C and 1Vr, for moisture resistance reliability, it was evaluated for 12 hours under conditions of 85°C, 85RH% (relative humidity), and 0.6Vr, and the number of samples to be evaluated was 100. A resistance value measured at a time at which the evaluation was completed has decreased by more than 10³ Ω or more, as compared to an initial level, was judged as NG.

**[Table 1]**

| Conditions | High Temperature Reliability Defect Rate | Moisture Resistance Reliability Defect Rate |
|---|---|---|
| Comparative Example 1 | 3/400 | 7/400 |
| Inventive Example 1 | 0/400 | 1/400 |

Referring to Table 1, it can be seen that high temperature reliability and moisture resistance reliability of Inventive Example 1 were superior to those of Comparative Example 1.

Therefore, in Comparative Example in which first and second external electrode layers were included as in some embodiments of the present disclosure, glass of the second external electrode layer included Fe, and glass of the first external electrode layer included Fe, it can be seen that high temperature reliability and moisture resistance reliability were improved.

Table 2 below lists the number of samples in which plating breakage defects occurred in Comparative Example 2 and Inventive Example 2.

Comparative Example 2 was a case in which a second external electrode layer was not formed and Fe was not detected in entire regions of external electrodes. Inventive Example 2 was a case in which first and second external electrode layers were included as in some embodiments of the present disclosure, glass of the second external electrode layer included Fe, and glass of the first external electrode layer does not include Fe. Comparative Example 2 and Inventive Example 2 both included a Ni plating layer and a Sn plating layer disposed on the Ni plating layer.

After 30 samples of Inventive Example 2 and 30 samples of Comparative Example 2 were mounted on a surface of a body in the first and third directions to peel off the Sn plating layer, the number of plating breakage occurred at a point (triple point) in which 3 surfaces of the body meet was confirmed. Since there were 4 triple points per sample, Table 2 below illustrates the number of plating breakage occurred based on 120 samples.

**[Table 2]**

| Conditions | Plating Breakage Defects |
|---|---|
| Comparative Example 2 | 3/120 |
| Inventive Example 2 | 0/120 |

Referring to Table 2, it can be seen that Comparative Example 2 had more plating breakage defects than Inventive Example 2. In Comparative Example 2, the second external electrode layer as in the present disclosure was not formed, and as a result, the electrode layer of the external electrode did not form a sufficient thickness at the triple point, causing the plating to peel off or break. Inventive Example 2 was a case in which first and second external electrode layers were included as in some embodiments of the present disclosure, glass of the second external electrode layer included Fe, and glass of the first external electrode layer does not include Fe, it was expected that a thickness of the electrode layer at an edge portion was sufficiently secured to be thick and the glass included Fe, to improve plating properties by preventing erosion by a plating solution.

Table 3 below compares capacitance characteristics, contact properties, and ESR characteristics of Comparative Example 3 and Inventive Example 3.

Comparative Example 3 was a case in which glass including Fe were evenly distributed in an electrode layer and Fe was detected even in a central portion of the electrode layer in a thickness direction. Inventive Example 3 was a case in which first and second external electrode layers were included as in some embodiments of the present disclosure, glass of the second external electrode layer included Fe, and Fe was not detected in a central portion of the first external electrode layer in a thickness direction.

Capacitance measurement may be results of heat treatment under conditions of 150°C, 1Hr treatment, and 2Hr aging. (n=50) capacitance was judged as NG when the capacitance percentage did not fall within a 10% deviation considering aging.

In contact properties, when a percentage relative to reference capacitance was 70% or less, it was judged as the presence of contact properties, and when the percentage was less than 700, it was judged as defective. In ESR characteristics, 100 samples were mounted on a dedicated board, and were measured at 1 MHz.

**[Table 3]**

| Conditions | Capacitance NG Number | Defects in Contact | ESR | |
|---|---|---|---|---|
| | | | Avg. | Max. |
| Comparative Example 3 | 5/50 | 3/50 | 5.42 | 10.74 |
| Inventive Example 3 | 0/50 | 0/50 | 3.89 | 5.211 |

Referring to Table 3, it can be seen that Inventive Example 3 had the smaller number of capacitance NGs and the smaller number of contact defects, as compared to Comparative Example 3, and that ESR characteristics of Inventive Example 3 were superior to Comparative Example 3.

It was expected that Comparative Example 3 in which Fe was present in the central portion of the electrode layer in the thickness direction disrupted connection between the internal electrode and the electrode layer, to cause a decrease in capacitance and poor contact, and also improve ESR.

Table 4 below illustrates a comparison of plating breakage defects and ESR characteristics of Comparative Example 4 and Inventive Example 4.

Inventive Example 4 was a case in which first and second external electrode layers were included as in some embodiments of the present disclosure, and a conductive resin layer, a Ni plating layer, and a Sn plating layer were sequentially arranged on the second external electrode layer and the first external electrode layer, and the conductive resin layer covered a portion of the second external electrode layer and did not cover a different portion thereof, such that a portion of the second external electrode layer was in direct contact with a portion of the Ni plating layer. Comparative Example 4 was a case in which first and second external electrode layers were included, and a conductive resin layer, a Ni plating layer, and a Sn plating layer were sequentially arranged on the second external electrode layer and the first external electrode layer, and the conductive resin layer entirely covered the second external electrode layer.

After 30 samples of Inventive Example 4 and 30 samples of Comparative Example 4 were mounted on a surface of a body in the first and third directions to peel off the Sn plating layer, the number of plating breakage occurred at a point (triple point) in which 3 surfaces of the body meet was confirmed. Since there were 4 triple points per sample, Table 4 below illustrates the number of plating breakage occurred based on 120 samples.

In ESR, 100 samples were mounted on a dedicated board and measured at 1 MHz.

**[Table 4]**

| Conditions | Plating Breakage Defects | ESR | |
|---|---|---|---|
| | | Avg. | Max. |
| Comparative Example 4 | 10/120 | 7.82 | 15.74 |
| Inventive Example 4 | 0/120 | 5.41 | 7.54 |

Referring to Table 4, it can be seen that in Inventive Example 4, the smaller number of plating breakage defects occur, as compared to Comparative Example 4, and that ESR characteristics were also excellent.

It was expected that, in Inventive Example 4, the second external electrode layer was not completely covered with the conductive resin layer, but a portion thereof was exposed and in direct contact with the Ni plating layer, to prevent plating breakage due to glass erosion, and improve ESR characteristics.

The present disclosure is not limited by the above-described embodiments and accompanying drawings, but is intended to be limited by the appended claims. Therefore, various forms of substitution, modification, and change will be possible by those skilled in the art within the scope of the technical spirit of the present disclosure described in the claims, and this will also be said to fall within the scope of the present disclosure.

In addition, the expression "an embodiment" or "some embodiments" used in this specification does not mean the same embodiment, and may be provided to emphasize and describe different unique characteristics. However, an embodiment presented above may not be excluded from being implemented in combination with features of another embodiment. For example, although the description in a specific embodiment is not described in another example, it can be understood as an explanation related to another example, unless otherwise described or contradicted by the other embodiment.

The terms used in this disclosure are used only to illustrate various examples and are not intended to limit the present inventive concept. Singular expressions include plural expressions unless the context clearly dictates otherwise.

One of many effects of the present disclosure is to provide a multilayer electronic component having excellent moisture resistance reliability and high temperature reliability.

One of many effects of the present disclosure is to provide a multilayer electronic component suppressing an increase in equivalent series resistance (ESR).

However, various advantages and effects of the present disclosure are not limited to the above-described contents, and can be more easily understood in a process of explaining specific embodiments of the present disclosure.

While example embodiments have been illustrated and described above, it will be apparent to those skilled in the art that modifications and variations could be made without departing from the scope of the present disclosure as defined by the appended claims.

## Claims

1. A multilayer electronic component comprising:
a body including a dielectric layer and first and second internal electrodes alternately disposed with the dielectric layer in a first direction, a first surface and a second surface opposing each other in the first direction, a third surface and a fourth surface, connected to the first and second surfaces and opposing each other in a second direction, and a fifth surface and a sixth surface, connected to the first to fourth surfaces and opposing each other in a third direction; and
external electrodes including band portions disposed on the first and second surfaces, connection portions disposed on the third and fourth surfaces, and edge portions connecting the band portions and the connection portions and disposed at edges of the body connecting the first and second surfaces and the third and fourth surfaces,
wherein the external electrodes includes first external electrode layers connected to the first and second internal electrodes and including a first glass, and second external electrode layers disposed on the edge portions of the first external electrode layer and including a second glass, and
wherein the second glass includes Fe, and the first glass does not include Fe.

2. The multilayer electronic component of claim 1, wherein a thickness of at least one of the first external electrode layers of the edge portions is smaller than a thickness of at least one of the first external electrode layers of the connection portions and a thickness of at least one of the first external electrode layers of the band portions.

3. The multilayer electronic component of claim 1, wherein the second external electrode layers are also disposed on a portion of the connection portions or a portion of the band portions of the first electrode layers.

4. The multilayer electronic component of claim 1, wherein the first glass comprises one or more selected from the group consisting of Ba, Zn, and Al, and the second glass further comprises one or more selected from the group consisting of Ba, Zn, and Al.

5. The multilayer electronic component of claim 1, wherein a minimum thickness of at least one of the second external electrode layers is 1pm or more.

6. The multilayer electronic component of claim 1, wherein the external electrodes further comprise first plating layers disposed on the first external electrode layers, on which the second external electrode layers are not disposed, or the second external electrode layers, and second plating layers disposed on the first plating layers.

7. The multilayer electronic component of claim 6, wherein the first plating layers covers both the first external electrode layers not covered by the second external electrode layers, and the second external electrode layers.

8. The multilayer electronic component of claim 1, wherein the external electrodes further comprise conductive resin layers covering the first external electrode layers not covered by the second external electrode layers.

9. The multilayer electronic component of claim 8, wherein the conductive resin layers cover a portion of the second external electrode layers.

10. The multilayer electronic component of claim 9, wherein the external electrodes further comprise the second external electrode layers not covered by the conductive resin layers, and first plating layers disposed on the conductive resin layers,
a portion of the first plating layers are in contact with a portion of the second external electrode layers not covered by the second conductive resin layers.

11. The multilayer electronic component of claim 10, wherein the external electrodes further comprise second plating layers disposed on the first plating layers.

12. The multilayer electronic component of claim 8, wherein the conductive resin layers comprise a metal filler and a resin.
